# EUROPEAN PATENT SPECIFICATION

(11) **EP 4 461 259 B1**
(45) Date of publication and mention of the grant of the patent: **19.11.2025**
(21) Application number: 24173211.4
(22) Date of filing: 29.04.2024
(51) Int. Cl.: A61C 17/22

(54) **MOTOR ASSEMBLY AND BRUSH HANDLE ASSEMBLY FOR ELECTRIC TOOTHBRUSH, AND ELECTRIC TOOTHBRUSH**
MOTORANORDNUNG UND BÜRSTENGRIFFANORDNUNG FÜR ELEKTRISCHE ZAHNBÜRSTE SOWIE ELEKTRISCHE ZAHNBÜRSTE
ENSEMBLE MOTEUR ET ENSEMBLE MANCHE DE BROSSE POUR BROSSE À DENTS ÉLECTRIQUE, ET BROSSE À DENTS ÉLECTRIQUE

(30) Priority: 06.05.2023 CN 202321079577 U
(43) Date of publication of application: 13.11.2024
(73) Proprietor: Shenzhen Shuye Technology Co., Ltd., Shenzhen, Guangdong 518000 (CN)
(72) Inventor: YE, Hongxin, Xinxing, Zhejiang 323400 (CN); WANG, Zisheng, Shenzhen, Guangdong 518000 (CN); XIAO, Meiliang, Shenzhen, Guangdong 518000 (CN)
(74) Representative: Murgitroyd & Company

(56) References cited:
- US-A1- 2014 232 316

## Description

### TECHNICAL FIELD

The present disclosure relates to the technical field of electric toothbrushes, and more specifically to amotor assembly for an electric toothbrush, a brush handle assembly for an electric toothbrush, and an electric toothbrush.

### BACKGROUND

The electric toothbrush includes a brush handle assembly and a brush head assembly. The brush handle assembly includes a brush handle housing, a motor assembly, and a battery, etc. The battery is configured to charge the motor assembly, and an output shaft of the motor assembly can drive the brush head assembly to vibrate or oscillate reciprocally. In the related art, the motor assembly is configured to control a rotation amplitude of the output shaft through a control board and a position sensor, so as to control an oscillation amplitude of the brush head assembly. The position sensor is required to improve the detection accuracy by means of an adapted position feedback member, however, the mounting of the position feedback member is not stable enough, which leads to a poor control effect on the brush head assembly.

The foregoing is only intended to assist in understanding the technical solution of the present disclosure, and does not mean that the foregoing is recognized as prior art.
A US patent application No. 20140232316A1 discloses a control module for a motorized powered surgical tool. The module includes a trigger sensor, a motor rotor position sensor and control circuit. The trigger sensor and motor rotor position sensor output their signals by monitoring magnetic fields associated with, respectively the trigger and the motor rotor. Based on signals from the trigger sensor and the motor rotor position sensor, the control circuit selectively applies energization signals to the windings of the motor. The module includes a shell that separates the trigger sensor, the motor rotor position sensor and the control circuit from the motor.

### SUMMARY OF THE DISCLOSURE

In view of the above problems, the present disclosure proposes a motor assembly for an electric toothbrush, aiming to solve the technical problem that the mounting of the position feedback member is not stable enough, which leads to a poor control effect on the brush head assembly. The invention is set out in the appended set of claims.

In order to realize the above purpose, the proposed motor assembly includes: a motor body, arranged with an output shaft;a mounting seat, defining a connection hole; wherein the mounting seat is fixedly sleeved on the output shaft through the connection hole to be rotatable with the output shaft; the mounting seat further defines a mounting slot disposed on a peripheral side of the connection hole;a position feedback member, arranged at the mounting slot to be rotatable with the output shaft;anda position sensor, spaced apart from the mounting seat and disposed on a side toward which anopening of the mounting slot is oriented; wherein the position sensor is configured to detect amotion position of the position feedback member.

In some embodiments, the mounting slot extends in a ring-like shape around a periphery side of the connection hole, and the position feedback member is configured in a ring-like shape to be adapted to be mounted in the mounting slot.

In some embodiments, the mounting seat includes an inner peripheral wall, an outer peripheral wall, and a bottom wall connecting the inner peripheral wall and the outer peripheral wall; the inner peripheral wall, the outer peripheral wall, and the bottom wall together enclose to define the mounting slot; the inner peripheral wall encloses to define the connection hole.

In some embodiments, an end of the inner peripheral wall adjacent to the position sensor protrudes from an end of the position feedback member away from the bottom wall.

In some embodiments, an end of the position feedback member away from the bottom wall protrudes from an end of the peripheral wall adjacent to the position sensor.

In some embodiments, the output shaft includes an output end and a feedback end; the output end is configured to be connected toa brush handle assembly of the electric toothbrush, and the mounting seat is sleeved on the feedback end.

In some embodiments, the opening of the mounting slot is backwardly away from the output end.

In some embodiments, the motor assembly further includes a circuit board arranged on a side of the feedback end along a length direction of the output shaft, and the position sensor is arranged on the circuit board.

In some embodiments, the motor body includes a motor housing, and the output shaft is rotatably arrangedon the motor housing; the output end protrudes from a first end of the motor housing, and the feedback end protrudes from a second end of the motor housing, the first end being opposite to the second end; the motor assembly further includes a connection housing connected to a side of the motor housing near the feedback end and looped around the feedback end; the circuit board is arranged covering an end of the connection housing away from the motor housing.

In some embodiments, the motor body further includes a bearing disposed at an end of the motor housing near the feedback end, the output shaft being fixedly mated with an inner ring of the bearing; the mounting seat is arranged with a limiting portion protruding froma side of the mounting seat away from the mounting slot, the limiting portion being arranged along the peripheral side of the connection hole and abutting against the inner ring of the bearing.

In some embodiments, the motor body further includes a bottom cover spaced between the connection housing and an inner cavity of the motor housing, the feedback end penetrating the bottom cover; a side of the bottom cover away from the mounting seat defines a support slot, and the bearing is arranged at the support slot; a positioning projection is arranged protruding from a peripheral wall of the bottom cover, and an end wall of the motor housing defines a positioning slot, wherein the positioning projection is configured to locate and mate with the positioning slot; and/or, the peripheral wall of the bottom cover defines a wire routing notch configured to provide for a wire between the circuit board and the motor body to pass through.

In some embodiments, the mounting seat is a copper member; and/or, the position feedback member is a magnetic member, and the position sensor is a Hall sensor.

In some embodiments, the magnetic member comprises at least two opposite magnetic poles; the position sensor comprises two position sensors, and the two position sensors are spaced apart along a peripheral direction of the output shaft;one of the two position sensors is configured to sense a corresponding magnetic pole of the magnetic member, and the other of the two position sensors is configured to sense another magnetic pole of the magnetic member opposite to the corresponding magnetic pole.

The present disclosure further proposes a brush handle assembly for an electric toothbrush, comprising a brush handle housing, a battery, and the motor assembly as above; wherein the battery is electrically connected to the motor assembly, the battery and the motor assembly are both arranged in the brush handle housing, and the output shaft of the motor assembly extends out of the brush handle housing.

The present disclosure further proposes an electric toothbrush, comprising a brush head assembly and the brush handle assembly as above; wherein the brush head assembly is detachably connected to the output shaft of the motor assembly.

In the technical solution of the motor assembly for an electric toothbrush as proposed in the present disclosure, by arranging the position feedback member on the output shaft through the mounting seat, the mounting stability of the position feedback member may be improved, and a squeezing force on the position feedback member during a mounting process may be reduced, thereby avoiding damage to the position feedback member or an unstable motion process. As the mounting stability and structural stability of the position feedback member are improved, the reliability of a position detection result of the position sensor on the position feedback member may be improved, thereby improving the control effect on the oscillation process of the brush head assembly.

### BRIEF DESCRIPTION OF THE DRAWINGS

To more clearly illustrate the technical solutions of the embodiments of the present disclosure, the accompanying drawings of the embodiments will be briefly described below, and it will be apparent that the accompanying drawings in the following description relate only to some embodiments of the present disclosure and other drawings may be obtained from these drawings by those skilled in the art without creative labor.
FIG. 1 is a structural schematic view of a motor assembly according to some embodiments of the present disclosure.
FIG. 2 is a cross-sectional schematic view of a motor assembly according to some embodiments of the present disclosure.
FIG. 3 is a partially enlarged view at area A in FIG. 2.
FIG. 4 is an exploded schematic view of a motor assembly according to some embodiments of the present disclosure.
FIG. 5 is an exploded cross-sectional schematic view of a motor assembly according to some embodiments of the present disclosure.
FIG. 6 is a partially enlarged view at area B in FIG. 5.
FIG. 7 is a structural schematic view of a position feedback member and amounting seat according to some embodiments of the present disclosure.

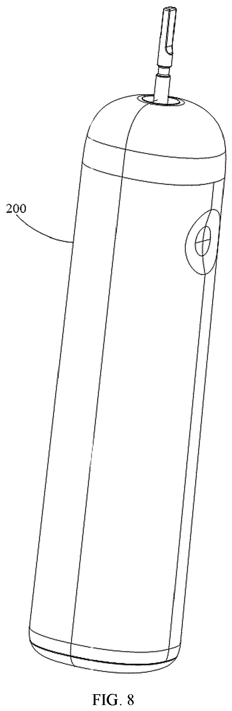

FIG. 8 is a structural schematic view of abrush handle assembly according to some embodiments of the present disclosure.

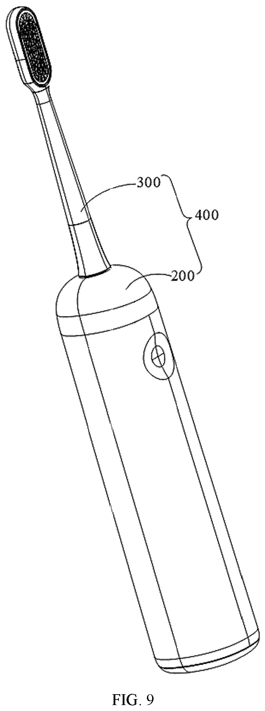

FIG. 9 is a structural schematic view of an electric toothbrush according to some embodiments of the present disclosure.

### Reference numerals

| No. | Name | No. | Name | No. | Name |
|---|---|---|---|---|---|
| 10 | motor body | 11 | output shaft | 20 | mounting seat |
| 21 | connection hole | 22 | mounting slot | 30 | position feedback member |
| 40 | position sensor | 23 | inner peripheral wall | 24 | outer peripheral wall |
| 25 | bottom wall | 111 | output end | 112 | feedback end |
| 50 | circuit board | 12 | motor housing | 60 | connection housing |
| 13 | bearing | 26 | limiting portion | 200 | brush handle assembly |
| 300 | brush head assembly | 400 | electric toothbrush | 14 | bottom cover |
| 141 | support slot | 142 | positioning protrusion | 121 | positioning slot |
| 143 | wire routing notch | | | | |

The realization of the purpose, functional features, and advantages of the present disclosure will be further described in conjunction with the embodiments and with reference to the accompanying drawings.

### DETAILED DESCRIPTION

The technical solutions in the embodiments of the present disclosure will be described clearly and completely in the following in conjunction with the accompanying drawings in the embodiments of the present disclosure, and it is obvious that the described embodiments are only a part of the embodiments of the present disclosure and not all of the embodiments. Based on the embodiments in the present disclosure, all other embodiments obtained by those skilled in the art without creative labor fall within the scope of the present disclosure. In addition, the technical solutions between various embodiments can be combined with each other, but it must be based on the fact that those skilled in the art is able to realize it. When the combination of the technical solutions appears to be contradictory or unattainable, it should be considered that the combination of such technical solutions does not exist, and is not included in the scope claimed by the present disclosure.

It should be noted that when the embodiments of the present disclosure involve directional indications (such as up, down, left, right, forward, back ......), the directional indications are only intended to explain a relative positional relationship,a movement, etc. between the various components in a particular attitude. When the particular attitude changes, the directional indications are also changed accordingly.

In addition, when the embodiments of the present disclosure contain descriptions involving "first", "second", etc., the descriptions of "first", "second", etc. are intended only for descriptive purposes, and are not to be construed as indicating or implying their relative importance or implicitly specifying the number of the indicated technical features. That is, a feature defined as "first" or "second" may include at least one such feature either explicitly or implicitly. In addition, the meaning of "and/or" in the whole text is to include three concurrent solutions.For example, "A and/or B" includes an A solution, a B solution, and a solution in which A and B are satisfied at the same time.

The present disclosure proposes a motor assembly for an electric toothbrush 400.

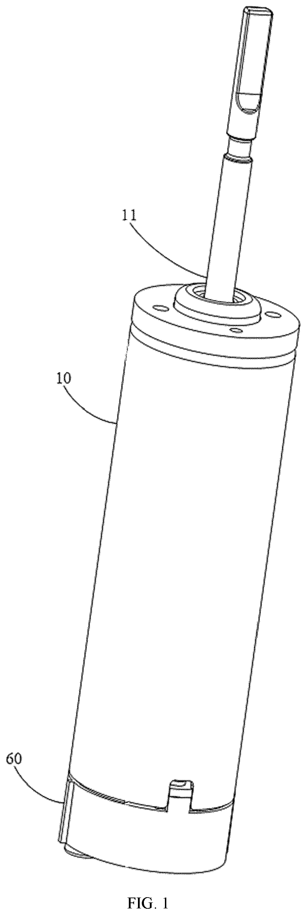

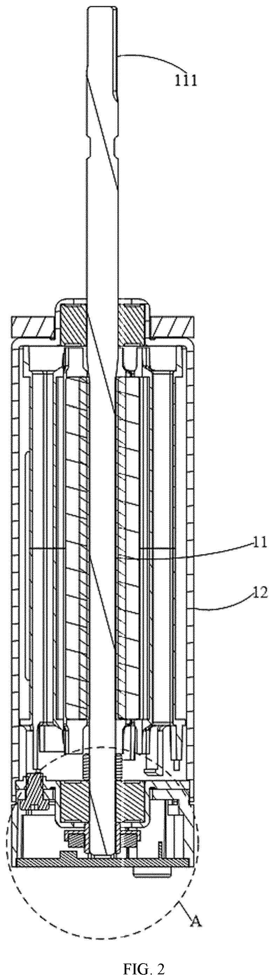

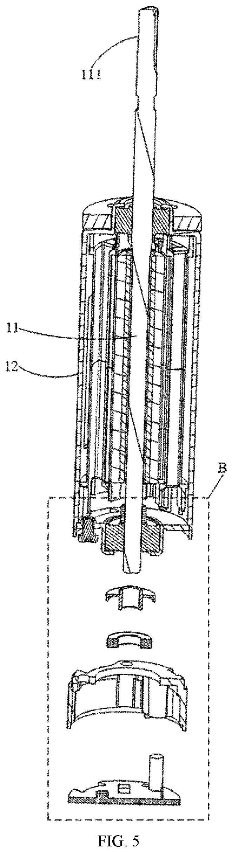

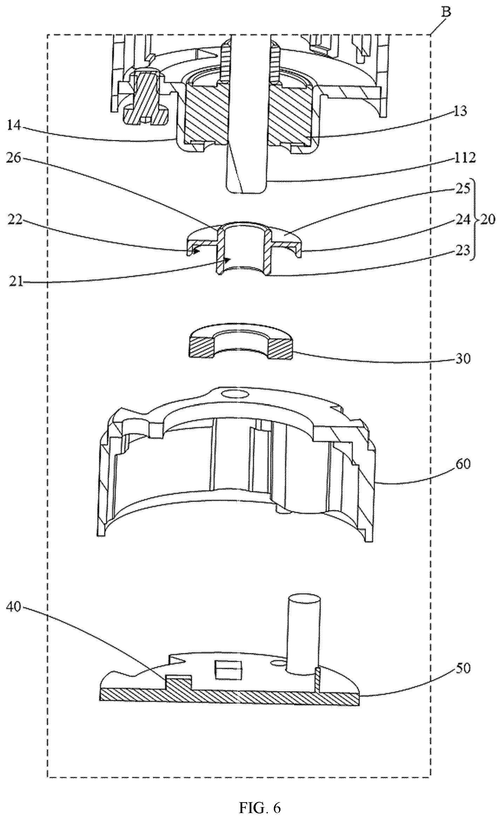

In the embodiments of the present disclosure, referring to FIGS. 1 to 6, the motor assembly includes a motor body 10, a mounting seat 20, a position feedback member 30, and a position sensor 40; the motor body 10 is arranged with an output shaft 11; the mounting seat 20 defines a connection hole 21, and the mounting seat 20 is fixedly sleeved on the output shaft 11 through the connection hole 21, so as to be rotatable with the output shaft 11; the mounting seat 20 further defines a mounting slot 22 disposed on a peripheral side of the connection hole 21; the position feedback member 30 is arranged at the mounting slot 22, so as to be rotatable with the output shaft 11; the position sensor 40 is spaced apart from the mounting seat 20 and is disposed on a side toward which anopening of the mounting slot 22 is oriented, and the position sensor 40 is configured to detect amotion position of the position feedback member 30.

In the embodiments, the motor body 10 includes a motor stator and a motor rotor, and the output shaft 11 is connected to the motor rotor. The output shaft 11 is configured to be connected to the brush head assembly 300 of the power toothbrush, such that the motor body 10 can drive the brush head assembly 300 to rotate. The specific shape of the mounting seat 20 is not limited, as long as it is satisfied that the connection hole 21 and mounting slot 22 are defined. The connection hole 21 may be disposed at a center of the mounting seat 20, and the opening direction of the mounting slot 22 may be parallel to a length direction of the output shaft 11 or perpendicular to the length direction of the output shaft 11, which is not limited herein. When the opening direction of the mounting slot 22 is parallel to the length direction of the output shaft 11, the position sensor 40 is disposed on a side of the mounting seat 20 along the length direction of the output shaft 11. When the opening direction of the mounting slot 22 is perpendicular to the length direction of the output shaft 11, i.e., the mounting slot 22 is disposed on a peripheral wall of the mounting seat 20, the position sensor 40 is disposed on a peripheral side of the mounting seat 20.

The mounting seat 20 may be a plastic member or a metal member, and specifically may be a copper member, to improve the structural strength of the mounting seat 20 and the stability of a connection between the mounting seat 20 and the output shaft 11.

The mounting seat 20 and the output shaft 11 may be fixed through the connection hole 21, or a hole wall of the connection hole 21 may be bonded to the output shaft 11 to fix the mounting seat 20 and the output shaft 11, which is not limited herein, as long as the mounting seat 20 can synchronously rotate with the output shaft 11. The shape of the position feedback member 30 is not limited and may be block-shaped, spherical or ring-shaped, etc. The shape of the mounting slot 22 corresponds to the shape of the position feedback member 30, and the position feedback member 30 is fixedly embedded in the mounting slot 22, such that the position feedback member 30 can synchronously rotate with the output shaft 11.

The position sensor 40 may be a laser sensor or a Hall sensor, which is not limited herein, as long as the motion position of the position feedback member 30 can be detected, and the motion position of the position feedback member 30 can reflect a motion position of the brush head assembly 300. The motor assembly further includes a circuit board 50, which is electrically connected to the position sensor 40 and the motor body 10, and the circuit board 50 can control the output shaft 11 to reverse when the position feedback member 30 reaches a preset position, thereby controlling the brush head assembly 300 to conduct a reciprocal oscillation.

By arranging the position feedback member 30 on the output shaft 11 through the mounting seat 20, the mounting stability of the position feedback member 30 may be improved, and a squeezing force on the position feedback member 30 during a mounting process may be reduced, thereby avoiding damage to the position feedback member 30 or an unstable motion process. As the mounting stability and structural stability of the position feedback member 30 are improved, the reliability of a position detection result of the position sensor 40 on the position feedback member 30 may be improved, thereby improving the control effect on the oscillation process of the brush head assembly 300.

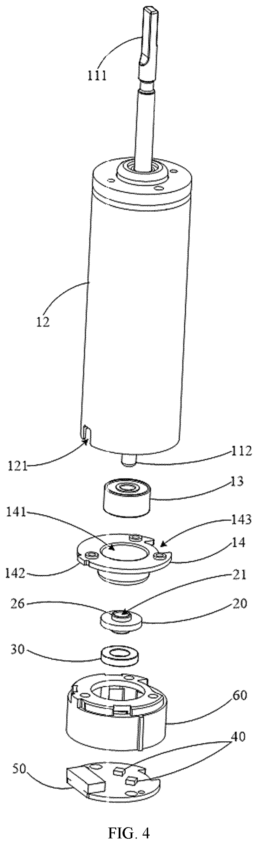

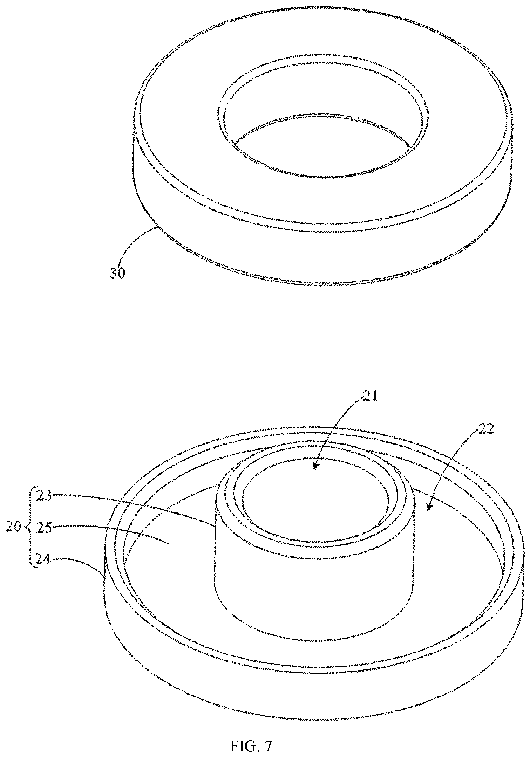

Exemplarily, as shown in FIGS. 4 and 7, the mounting slot 22 extends in a ring-like shape around the periphery side of the connection hole 21, and the position feedback member 30 is configured also in a ring-like shape to be adapted to be mounted in the mounting slot 22. In this way, a mating area between the position feedback member 30 and the mounting slot 22 may be increased to further improve the stability of the mating between the position feedback member 30 and the mounting slot 22.

Specifically, as shown in FIGS. 4 and 7, the mounting seat 20 includes an inner peripheral wall 23, an outer peripheral wall 24, and a bottom wall 25 connecting the inner peripheral wall 23 and the outer peripheral wall 24, the inner peripheral wall 23, the outer peripheral wall 24 and the bottom wall 25 together enclosing to define the mounting slot 22; where the bottom wall 25 forms a slot bottom of the mounting slot 22, and the inner peripheral wall 23 encloses to define the connection hole 21. In this way, the structure of the mounting seat 20 may be simplified, which makes the center of gravity of the mounting seat 20 more evenly dispersed to improve the rotational stability of the mounting seat 20.

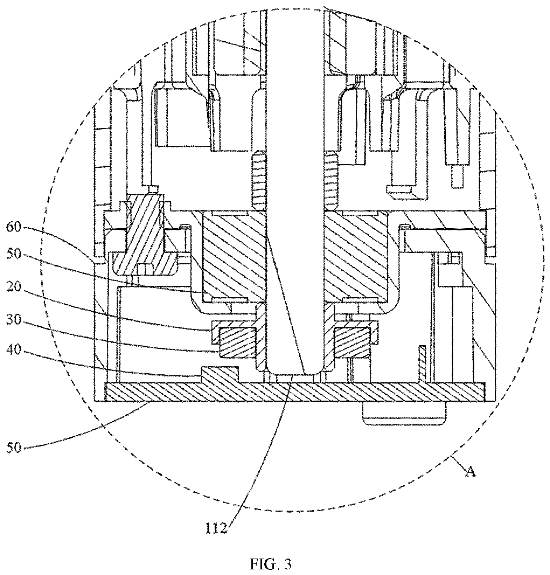

In practice, as shown in FIG. 3, an end of the inner peripheral wall 23 adjacent to the position sensor 40 protrudes from an end of the position feedback member 30 away from the bottom wall 25. In this way, an axial dimension of the connection hole 21 may be increased to increase the mating area between the connection hole 21 and the output shaft 11, thereby further improving the mating stability of the connection hole 21 and the output shaft 11.

In addition, as shown in FIG. 3, the end of the position feedback member 30 away from the bottom wall 25 protrudes from an end of the peripheral wall 24 adjacent to the position sensor 40. In this way, a machining process (e.g., cutting process) of the mounting seat 20 may be simplified to improve the machining efficiency.

The mounting seat 20 may be sleeved at the middle of the output shaft 11 orat an end of the output shaft 11. Exemplarily, as shown in FIGS. 3 to 6, the output shaft 11 includes an output end 111 and a feedback end 112, where the output end 111 is configured to be connected to the brush handle assembly 200 of the electric toothbrush 400, and the mounting seat 20 is sleeved on the feedback end 112. The middle portion of the output shaft 11 is mated with the motor rotor, with the output end 111 being for connection with the brush handle assembly 200, and the feedback end 112 being for connection with the positional feedback member 30 for connection, such that the overall length of the output shaft 11 may be reasonably utilized to reduce mutual interference between the mounting seat 20 and the position feedback member 30 and other parts of the motor body 10.

Specifically, as shown in FIG. 3, the opening of the mounting slot 22 is backwardly away from the output end 111, such that the position sensor 40 may be disposed on a side of the mounting seat 20 that is away from the output end 111, thereby simplifying the mounting process of the position sensor 40.

In practice, as shown in FIGS. 3 to 6, the motor assembly further includes a circuit board 50, the circuit board 50 being arranged on a side of the feedback end 112 in the length direction of the output shaft 11, and the position sensor 40 being arranged on the circuit board 50. By arranging the position sensor 40 directly on the circuit board 50,a wire between the position sensor 40 and the circuit board 50 may be omitted, and further, a separate support structure for the position sensor 40 may be omitted, whichmakes the internal structure of the motor assembly simpler and more compact.

Exemplarily, as shown in FIGS. 4 to 6, the motor body 10 includes a motor housing 12, and the output shaft 11 is rotatably arrangedon the motor housing 12, the output end 111 and the feedback end 112 each protruding from a corresponding end of the motor housing 12. The motor assembly further includes a connection housing 60 connected to a side of the motor housing 12 near the feedback end 112 and looped around the feedback end 112. The circuit board 50 is arranged covering an end of the connection housing 60 away from the motor housing 12.

The motor housing 12 extends along the length direction of the output shaft 11. During an assembling process of the motor assembly, the motor body 10 may first be assembled and molded independently, as long as the ends of the output shaft 11 extend beyond the ends of the motor housing 12. After the motor body 10 is assembled and molded, the mounting seat 20 is first sleeved on the feedback end 112 and the position feedback member 30 is mounted, then the connection housing 60 is mounted on the motor housing 12, and finally the circuit board 50 with the position sensor 40 mounted thereon is mounted covering on the connection housing 60. In this way, the way of assembling the motor assembly may be simplified so as to increase the efficiency of assembling the motor assembly.

Specifically, as shown in FIGS. 3 to 6, the motor body 10 further includes a bearing 13 disposed at the end of the motor housing 12 near the feedback end 112, the output shaft 11 being fixedly mated with an inner ring of the bearing 13. The mounting seat 20 is arranged with a limiting portion 26 protruding froma side of the mounting seat 20 away from the mounting slot 22, the limiting portion 26 being arranged along the peripheral side of the connection hole 21 and abutting against the inner ring of the bearing 13.

The bearing 13 may improve the rotational stability of the feedback end 112 of the output shaft 11, thereby preventing a distorted position detection result of the position feedback member 30 caused by the feedback end 112 deviating from a rotation axis. By abutting the limiting portion 26 of the mounting seat 20 against the inner ring of the bearing 13, an outer ring of the bearing 13 and the mounting seat 20 may be spaced apart sufficiently to prevent obstruction to the rotation of the mounting seat 20, thereby improving the rotational stability of the mounting seat 20.

A space enclosed by the connection housing 60 may be in communication withan inner cavity of the motor housing 12, or may be separated from the inner cavity of the motor housing 12.

In practice, as shown in FIGS. 4 to 6, the motor body 10 further includes a bottom cover 14 spaced between the connection housing 60 and the inner cavity of the motor housing 12, the feedback end 112 penetrating the bottom cover 14. A side of the bottom cover 14 away from the mounting seat 20 defines a support slot 141, and the bearing 13 is arranged at the support slot 141. A positioning projection 142 is arranged protruding from a peripheral wall of the bottom cover 14, and an end wall of the motor housing 12 defines a positioning slot 121, where the positioning projection 142 is configured to locate and mate with the positioning slot 121. And/or, the peripheral wall of the bottom cover 14 defines a wire routing notch 143 configured to provide for a wire between the circuit board 50 and the motor body 10 to pass through.

The bottom cover 14 may provide support for the bearing 13 and connection to the connection housing 60, which may improve the stability of the mounting of the bearing 13 and the connection housing 60. Specifically, an inner wall surface of the motor housing 12 is convexly arranged with a fixing protrusion, and the fixing protrusion defines a fixing hole. The connection housing 60 defines a first hole corresponding to the fixing hole, and the bottom cover 14 defines a second hole corresponding to the first hole, where the fixing hole, the first hole, and the second hole may be connected by a fastener to realize the fixing connection of the motor housing 12, the bottom cover 14, and the connection housing 60. The positioning protrusion 142 cooperates with the positioning slot 121, which may play a fool-proofing role for the alignment of the second hole and the fixing hole, and realize a pre-fixing of the bottom cover 14 and the motor housing 12.

Exemplarily, the position feedback member 30 may be provided as a magnetic member, and the position sensor 40 may be provided as a Hall sensor. The position sensor 40 detects the position of the position feedback member 30 by means of magnetic induction, such that the reliability of the detection results may be improved.

Specifically, the magnetic member includes at least two opposite magnetic poles; the number of the position sensors 40 are two, and the two position sensors 40 are spaced apart along the peripheral direction of the output shaft 11. The two position sensors 40 are each configured to sense a corresponding magnetic pole of the magnetic member.

The magnetic member may be formed by connecting two magnets having different magnetic poles, or may be formed by magnetizing a same magnet zonally to form two different magnetic poles, which is not limited herein, as long as the magnetic member has two opposite magnetic poles. The two position sensors 40 are mounted corresponding to two preset positions of the position feedback member 30, and the position feedback member 30 can be detected by a corresponding position sensor 40 at any one of the preset positions, thereby allowing the circuit board 50 to control the output shaft 11 to reciprocally rotate between the two preset positions of the position feedback member 30.

It should be noted that since the position sensors 40 are disposed on the side toward which the opening of the mounting slot 22 is oriented, even if the mounting seat 20 is a copper member or other metal material affecting the magnetic induction line, it will not affect the detection process of the position sensors 40.

In the technical solution of the motor assembly of the electric toothbrush 400 as proposed in the present disclosure, the fixed mounting of the position feedback member 30 on the output shaft 11 is realized through the mounting seat 20, which may improve the stability of the mounting of the position feedback member 30, and thus improve the detecting effect of the position sensor 40 on the position feedback member 30, thereby improving the controlling effect of the brush head assembly 300.

The present disclosure further proposes a brush handle assembly 200 for an electric toothbrush 400, the brush handle assembly 200 of the electric toothbrush 400 includes a brush handle housing, a battery, and a motor assembly. The specific structure of the motor assembly of the electric toothbrush 400 is referred to in the above embodiments. Since the brush handle assembly 200 of the electric toothbrush 400 is adopted with all of the technical solutions of all the above embodiments, it has at least all the beneficial effects brought about by the technical solutions of the above embodiments, which will not be repeated herein. The battery is electrically connected to the motor assembly, the battery and the motor assembly are both arranged in the brush handle housing, and the output shaft 11 of the motor assembly extends out of the brush handle housing.

The present disclosure further proposes an electric toothbrush 400, including a brush head assembly 300 and a brush handle assembly 200. The specific structure of the brush handle assembly 200 of the electric toothbrush 400 is referred to in the above embodiments. Since the electric toothbrush 400 is adopted with all of the technical solutions of all the above embodiments, it has at least all the beneficial effects brought about by the technical solutions of the above embodiments, which will not be repeated herein. The brush head assembly 300 is detachably connected to the output shaft 11 of the motor assembly.

Finally, it should be noted that the above embodiments are only intended to illustrate the technical solutions of the present disclosure, and not to limit them. Rather, the scope of the present invention is defined by the appended claims.

## Claims

1. A motor assembly for an electric toothbrush (400), comprising:
a motor body (10), arranged with an output shaft (11); and
a mounting seat (20), **characterized in that**
the mounting seat (20) defines a connection hole (21); wherein the mounting seat (20) is fixedly sleeved on the output shaft (11) through the connection hole (21) to be rotatable with the output shaft (11); the mounting seat (20) further defines a mounting slot (22) disposed on a peripheral side of the connection hole (21);
wherein the motor assembly further comprises a position feedback member (30), arranged at the mounting slot (22) to be rotatable with the output shaft (11); and
a position sensor (40), spaced apart from the mounting seat (20) and disposed on a side toward which an opening of the mounting slot (22) is oriented; wherein the position sensor (40) is configured to detect a motion position of the position feedback member (30).

2. The motor assembly according to claim 1, wherein the mounting slot (22) extends in a ring-like shape around a periphery side of the connection hole (21), and the position feedback member (30) is configured in a ring-like shape to be adapted to be mounted in the mounting slot (22).

3. The motor assembly according to claim 2, wherein the mounting seat (20) comprises an inner peripheral wall (23), an outer peripheral wall (24), and a bottom wall (25) connecting the inner peripheral wall (23) and the outer peripheral wall (24); the inner peripheral wall (23), the outer peripheral wall (24), and the bottom wall (25) together enclose to define the mounting slot (22); the inner peripheral wall (23) encloses to define the connection hole (21).

4. The motor assembly according to claim 3, wherein an end of the inner peripheral wall (23) adjacent to the position sensor (40) protrudes from an end of the position feedback member (30) away from the bottom wall (25).

5. The motor assembly according to claim 3, wherein an end of the position feedback member (30) away from the bottom wall (25) protrudes from an end of the peripheral wall adjacent to the position sensor (40).

6. The motor assembly according to any one of claims 1-5, wherein the output shaft (11) comprises an output end (111) and a feedback end (112); the output end (111) is configured to be connected to a brush handle assembly (200) of the electric toothbrush (400), and the mounting seat (20) is sleeved on the feedback end (112).

7. The motor assembly according to claim 6, wherein the opening of the mounting slot (22) is backwardly away from the output end (111).

8. The motor assembly according to claim 7, wherein the motor assembly further comprises a circuit board (50) arranged on a side of the feedback end (112) along a length direction of the output shaft (11), and the position sensor (40) is arranged on the circuit board (50).

9. The motor assembly according to claim 8, wherein the motor body (10) comprises a motor housing (12), and the output shaft (11) is rotatably arranged on the motor housing (12); the output end (111) protrudes from a first end of the motor housing (12), and the feedback end (112) protrudes from a second end of the motor housing (12), the first end being opposite to the second end;
the motor assembly further comprises a connection housing (60) connected to a side of the motor housing (12) near the feedback end (112) and looped around the feedback end (112); the circuit board (50) is arranged covering an end of the connection housing (60) away from the motor housing (12).

10. The motor assembly according to claim 9, wherein the motor body (10) further comprises a bearing (13) disposed at an end of the motor housing (12) near the feedback end (112), the output shaft (11) being fixedly mated with an inner ring of the bearing (13); the mounting seat (20) is arranged with a limiting portion (26) protruding from a side of the mounting seat (20) away from the mounting slot (22), the limiting portion (26) being arranged along the peripheral side of the connection hole (21) and abutting against the inner ring of the bearing (13).

11. The motor assembly according to claim 10, wherein the motor body (10) further comprises a bottom cover (14) spaced between the connection housing (60) and an inner cavity of the motor housing (12), the feedback end (112) penetrating the bottom cover (14); a side of the bottom cover (14) away from the mounting seat (20) defines a support slot (141), and the bearing (13) is arranged at the support slot (141);
a positioning projection (142) is arranged protruding from a peripheral wall of the bottom cover (14), and an end wall of the motor housing (12) defines a positioning slot (121), wherein the positioning projection (142) is configured to locate and mate with the positioning slot (121); and/or, the peripheral wall of the bottom cover (14) defines a wire routing notch (143) configured to provide for a wire between the circuit board (50) and the motor body (10) to pass through.

12. The motor assembly according to claim 1, wherein the mounting seat (20) is a copper member; and/or, the position feedback member (30) is a magnetic member, and the position sensor (40) is a Hall sensor.

13. The motor assembly according to claim 12, wherein the magnetic member comprises at least two opposite magnetic poles; the position sensor (40) comprises two position sensors (40), and the two position sensors (40) are spaced apart along a peripheral direction of the output shaft (11); one of the two position sensors (40) is configured to sense a corresponding magnetic pole of the magnetic member, and the other of the two position sensors (40) is configured to sense another magnetic pole of the magnetic member opposite to the corresponding magnetic pole.

14. A brush handle assembly (200) for an electric toothbrush (400), comprising a brush handle housing, a battery, and the motor assembly according to any one of claims 1-13; wherein the battery is electrically connected to the motor assembly, the battery and the motor assembly are both arranged in the brush handle housing, and the output shaft (11) of the motor assembly extends out of the brush handle housing.

15. An electric toothbrush (400), comprising a brush head assembly (300) and the brush handle assembly (200) according to claim 14; wherein the brush head assembly (300) is detachably connected to the output shaft (11) of the motor assembly.

## Patentansprüche

1. Eine Motorbaugruppe für eine elektrische Zahnbürste (400), umfassend:
einen Motorkörper (10), der mit einer Abtriebswelle (11) versehen ist; und
einen Montagesitz (20);
**dadurch gekennzeichnet, dass** der Montagesitz (20) ein Verbindungsloch (21) definiert; wobei der Montagesitz (20) durch das Verbindungsloch (21) fest auf die Abtriebswelle (11) aufgesteckt ist, um mit der Abtriebswelle (11) drehbar zu sein; der Montagesitz (20) ferner eine Montagenut (22) definiert, die auf einer Umfangsseite des Verbindungslochs (21) angeordnet ist;
wobei die Motorbaugruppe ferner umfasst:
ein Positionsrückmeldeteil (30), das in der Montagenut (22) angeordnet ist, um mit der Abtriebswelle (11) drehbar zu sein; und
einen Positionssensor (40), der beabstandet vom Montagesitz (20) angeordnet ist und auf einer Seite positioniert ist, zu der eine Öffnung der Montagenut (22) hin ausgerichtet ist; wobei der Positionssensor (40) konfiguriert ist, eine Bewegungsstellung des Positionsrückmeldeteils (30) zu erfassen.

2. Motorbaugruppe nach Anspruch 1, wobei die Montagenut (22) sich ringförmig um eine Umfangsseite des Verbindungslochs (21) erstreckt und das Positionsrückmeldeteil (30) ringförmig konfiguriert ist, um angepasst in der Montagenut (22) montiert werden zu können.

3. Motorbaugruppe nach Anspruch 2, wobei der Montagesitz (20) eine Innenumfangswand (23), eine Außenumfangswand (24) und eine Bodenwand (25), welche die Innenumfangswand (23) und die Außenumfangswand (24) verbindet, umfasst; wobei die Innenumfangswand (23), die Außenumfangswand (24) und die Bodenwand (25) zusammen umschließend die Montagenut (22) definieren; und wobei die Innenumfangswand (23) umschließend das Verbindungsloch (21) definiert.

4. Motorbaugruppe nach Anspruch 3, wobei ein Ende der Innenumfangswand (23), das benachbart zum Positionssensor (40) ist, über ein Ende des Positionsrückmeldeteils (30) hinausragt, das von der Bodenwand (25) entfernt ist.

5. Motorbaugruppe nach Anspruch 3, wobei ein Ende des Positionsrückmeldeteils (30), das von der Bodenwand (25) entfernt ist, über ein Ende der Außenumfangswand (24)hinausragt, das benachbart zum Positionssensor (40) ist.

6. Motorbaugruppe nach einem der Ansprüche 1 bis 5, wobei die Abtriebswelle (11) ein Abtriebsende (111) und ein Rückmeldende (112) umfasst; wobei das Abtriebsende (111) konfiguriert ist, um mit einer Bürstengriffbaugruppe (200) der elektrischen Zahnbürste (400) verbunden zu werden, und der Montagesitz (20) auf das Rückmeldende (112) aufgesteckt ist.

7. Motorbaugruppe nach Anspruch 6, wobei die Öffnung der Montagenut (22) rückwärts vom Abtriebsende (111) weg zeigt.

8. Motorbaugruppe nach Anspruch 7, wobei die Motorbaugruppe ferner eine Leiterplatte (50) umfasst, die auf einer Seite des Rückmeldendes (112) entlang einer Längsrichtung der Abtriebswelle (11) angeordnet ist, und der Positionssensor (40) auf der Leiterplatte (50) angeordnet ist.

9. Motorbaugruppe nach Anspruch 8, wobei der Motorkörper (10) ein Motorgehäuse (12) umfasst, und die Abtriebswelle (11) drehbar am Motorgehäuse (12) angeordnet ist; das Abtriebsende (111) von einem ersten Ende des Motorgehäuses (12) hervorsteht, und das Rückmeldende (112) von einem zweiten Ende des Motorgehäuses (12) hervorsteht, wobei das erste Ende dem zweiten Ende gegenüberliegt;
wobei die Motorbaugruppe ferner ein Verbindungsgehäuse (60) umfasst, das mit einer Seite des Motorgehäuses (12) in der Nähe des Rückmeldendes (112) verbunden ist und das Rückmeldende (112) umlaufend umgibt; die Leiterplatte (50) so angeordnet ist, dass sie ein Ende des Verbindungsgehäuses (60) abdeckt, das vom Motorgehäuse (12) entfernt ist.

10. Motorbaugruppe nach Anspruch 9, wobei der Motorkörper (10) ferner ein Lager (13) umfasst, das an einem Ende des Motorgehäuses (12) in der Nähe des Rückmeldendes (112) angeordnet ist, wobei die Abtriebswelle (11) fest mit einem Innenring des Lagers (13) in Eingriff ist; der Montagesitz (20) mit einem Begrenzungsteil (26) versehen ist, das von einer Seite des Montagesitzes (20) weg von der Montagenut (22) hervorragt, wobei das Begrenzungsteil (26) entlang der Umfangsseite des Verbindungslochs (21) angeordnet ist und gegen den Innenring des Lagers (13) anliegt.

11. Motorbaugruppe nach Anspruch 10, wobei der Motorkörper (10) ferner einen Bodendeckel (14) umfasst, der beabstandet zwischen dem Verbindungsgehäuse (60) und einem Innenraum des Motorgehäuses (12) angeordnet ist, wobei das Rückmeldende (112) den Bodendeckel (14) durchdringt; eine Seite des Bodendeckels (14), die vom Montagesitz (20) entfernt ist, eine Stütznut (141) definiert, und das Lager (13) in der Stütznut (141) angeordnet ist;
wobei eine Positionierungsvorragung (142) von einer Umfangswand des Bodendeckels (14) hervorragend angeordnet ist, und eine Endwand des Motorgehäuses (12) einen Positionierungsschlitz (121) definiert;
wobei die Positionierungsvorragung (142) konfiguriert ist, um mit dem Positionierungsschlitz (121) zu positionieren und in Eingriff zu kommen; und/oder die Umfangswand des Bodendeckels (14) einen Kabeldurchlass (143) definiert, der konfiguriert ist, um das Durchführen eines Kabels zwischen der Leiterplatte (50) und dem Motorkörper (10) zu ermöglichen.

12. Motorbaugruppe nach Anspruch 1, wobei der Montagesitz (20) ein Kupferteil ist; und/oder wobei das Positionsrückmeldeteil (30) ein Magnetteil ist und der Positionssensor (40) ein Hallsensor ist.

13. Motorbaugruppe nach Anspruch 12, wobei das Magnetteil mindestens zwei entgegengesetzte Magnetpole umfasst; der Positionssensor (40) zwei Positionssensoren (40) umfasst, und die zwei Positionssensoren (40) entlang einer Umfangsrichtung der Abtriebswelle (11) beabstandet angeordnet sind; einer der beiden Positionssensoren (40) konfiguriert ist, einen entsprechenden Magnetpol des Magnetteils zu erfassen, und der andere der beiden Positionssensoren (40) konfiguriert ist, einen anderen, dem entsprechenden Magnetpol entgegengesetzten Magnetpol des Magnetteils zu erfassen.

14. Eine Bürstengriffbaugruppe (200) für eine elektrische Zahnbürste (400), umfassend: ein Bürstengriffgehäuse, eine Batterie, und die Motorbaugruppe nach einem der Ansprüche 1 bis 13; wobei die Batterie elektrisch mit der Motorbaugruppe verbunden ist, die Batterie und die Motorbaugruppe beide im Bürstengriffgehäuse angeordnet sind, und die Abtriebswelle (11) der Motorbaugruppe aus dem Bürstengriffgehäuse herausragt.

15. Eine elektrische Zahnbürste (400), umfassend: eine Bürstenkopfbaugruppe (300) und die Bürstengriffbaugruppe (200) nach Anspruch 14; wobei die Bürstenkopfbaugruppe (300) lösbar mit der Abtriebswelle (11) der Motorbaugruppe verbunden ist.

## Revendications

1. Ensemble moteur pour une brosse à dents électrique (400), comprenant :
un corps de moteur (10), disposé avec un arbre de sortie (11) ; et
un siège de montage (20), **caractérisé en ce que**
le siège de montage (20) définit un trou de liaison (21) ; dans lequel le siège de montage (20) est manchonné de manière fixe sur l'arbre de sortie (11) à travers le trou de liaison (21) afin de pouvoir tourner avec l'arbre de sortie (11) ; le siège de montage (20) définit en outre une fente de montage (22) disposée sur un côté périphérique du trou de liaison (21) ;
dans lequel l'ensemble moteur comprend en outre un élément de rétroaction de position (30), disposé au niveau de la fente de montage (22) pour pouvoir tourner avec l'arbre de sortie (11) ; et
un capteur de position (40), espacé du siège de montage (20) et disposé sur un côté vers lequel est orientée une ouverture de la fente de montage (22) ;
dans lequel le capteur de position (40) est configuré pour détecter une position de déplacement de l'élément de rétroaction de position (30).

2. Ensemble moteur selon la revendication 1, dans lequel la fente de montage (22) s'étend en forme d'anneau autour d'un côté périphérique du trou de liaison (21), et l'élément de rétroaction de position (30) est configuré en forme d'anneau pour être adapté au montage dans la fente de montage (22).

3. Ensemble moteur selon la revendication 2, dans lequel le siège de montage (20) comprend une paroi périphérique interne (23), une paroi périphérique externe (24), et une paroi inférieure (25) reliant la paroi périphérique interne (23) et la paroi périphérique externe (24) ; la paroi périphérique interne (23), la paroi périphérique externe (24) et la paroi inférieure (25) s'entourent ensemble pour définir la fente de montage (22) ; la paroi périphérique interne (23) s'entoure pour définir le trou de liaison (21).

4. Ensemble moteur selon la revendication 3, dans lequel une extrémité de la paroi périphérique interne (23) adjacente au capteur de position (40) fait saillie d'une extrémité de l'élément de rétroaction de position (30) à l'opposé de la paroi inférieure (25).

5. Ensemble moteur selon la revendication 3, dans lequel une extrémité de l'élément de rétroaction de position (30) à l'opposé de la paroi inférieure (25) fait saillie d'une extrémité de la paroi périphérique adjacente au capteur de position (40).

6. Ensemble moteur selon l'une quelconque des revendications 1 à 5, dans lequel l'arbre de sortie (11) comprend une extrémité de sortie (111) et une extrémité de rétroaction (112) ; l'extrémité de sortie (111) est configurée pour être reliée à un ensemble manche de brosse (200) de la brosse à dents électrique (400), et le siège de montage (20) est manchonné sur l'extrémité de rétroaction (112).

7. Ensemble moteur selon la revendication 6, dans lequel l'ouverture de la fente de montage (22) est orientée vers l'arrière, à l'opposé de l'extrémité de sortie (111).

8. Ensemble moteur selon la revendication 7, dans lequel l'ensemble moteur comprend en outre une carte de circuits imprimés (50) disposée sur un côté de l'extrémité de rétroaction (112) dans une direction de longueur de l'arbre de sortie (11), et le capteur de position (40) est disposé sur la carte de circuits imprimés (50).

9. Ensemble moteur selon la revendication 8, dans lequel le corps de moteur (10) comprend un boîtier de moteur (12), et l'arbre de sortie (11) est disposé de manière rotative sur le boîtier de moteur (12) ; l'extrémité de sortie (111) fait saillie d'une première extrémité du boîtier de moteur (12), et l'extrémité de rétroaction (112) fait saillie d'une seconde extrémité du boîtier de moteur (12), la première extrémité étant opposée à la seconde extrémité ;
l'ensemble moteur comprend en outre un boîtier de liaison (60) relié à un côté du boîtier de moteur (12) proche de l'extrémité de rétroaction (112) et enroulé autour de l'extrémité de rétroaction (112) ; la carte de circuits imprimés (50) est disposée de manière à recouvrir une extrémité du boîtier de liaison (60) à l'opposé du boîtier de moteur (12).

10. Ensemble moteur selon la revendication 9, dans lequel le corps de moteur (10) comprend en outre un palier (13) disposé au niveau d'une extrémité du boîtier de moteur (12) proche de l'extrémité de rétroaction (112), l'arbre de sortie (11) s'étant accouplée de manière fixe avec un anneau interne du palier (13) ; le siège de montage (20) est disposé avec une partie de limitation (26) qui fait saillie d'un côté du siège de montage (20) à l'opposé de la fente de montage (22), la partie de limitation (26) étant disposée le long du côté périphérique du trou de liaison (21) et venant en butée contre l'anneau interne du palier (13).

11. Ensemble moteur selon la revendication 10, dans lequel le corps de moteur (10) comprend en outre un couvercle inférieur (14) espacé entre le boîtier de liaison (60) et une cavité interne du boîtier de moteur (12), l'extrémité de rétroaction (112) pénétrant dans le couvercle inférieur (14) ; un côté du couvercle inférieur (14) à l'opposé du siège de montage (20) définit une fente de support (141), et le palier (13) est disposé au niveau de la fente de support (141) ;
une saillie de positionnement (142) est disposée de manière à faire saillie d'une paroi périphérique du couvercle inférieur (14), et une paroi d'extrémité du boîtier de moteur (12) définit une fente de positionnement (121), dans lequel la saillie de positionnement (142) est configurée pour se positionner et s'accoupler avec la fente de positionnement (121) ; et/ou la paroi périphérique du couvercle inférieur (14) définit une encoche d'acheminement de fil (143) configurée pour permettre le passage d'un fil entre la carte de circuits imprimés (50) et le corps de moteur (10).

12. Ensemble moteur selon la revendication 1, dans lequel le siège de montage (20) est un élément en cuivre ; et/ou l'élément de rétroaction de position (30) est un élément magnétique, et le capteur de position (40) est un capteur à effet Hall.

13. Ensemble moteur selon la revendication 12, dans lequel l'élément magnétique comprend au moins deux pôles magnétiques opposés ; le capteur de position (40) comprend deux capteurs de position (40), et les deux capteurs de position (40) sont espacés dans une direction périphérique de l'arbre de sortie (11) ; l'un des deux capteurs de position (40) est configuré pour détecter un pôle magnétique correspondant de l'élément magnétique, et l'autre des deux capteurs de position (40) est configuré pour détecter un autre pôle magnétique de l'élément magnétique opposé au pôle magnétique correspondant.

14. Ensemble manche de brosse (200) pour une brosse à dents électrique (400), comprenant un boîtier de manche de brosse, une batterie, et l'ensemble moteur selon l'une quelconque des revendications 1 à 13 ; dans lequel la batterie est connectée électriquement à l'ensemble moteur, la batterie et l'ensemble moteur sont tous deux disposés dans le boîtier de manche de brosse, et l'arbre de sortie (11) de l'ensemble moteur s'étend hors du boîtier de manche de brosse.

15. Brosse à dents électrique (400), comprenant un ensemble tête de brosse (300) et l'ensemble manche de brosse (200) selon la revendication 14 ; dans laquelle l'ensemble tête de brosse (300) est relié de manière amovible à l'arbre de sortie (11) de l'ensemble moteur.
